# DEMANDE DE BREVET EUROPEEN

(11) **EP 1 378 682 A1**
(43) Date de publication de la demande: **07.01.2004**
(21) Numéro de dépôt: 03364012.9
(22) Date de dépôt: 01.07.2003
(51) Int. Cl.: F16F 13/16

(54) **Dispositif d'articulation hydroélastique à effet axial**

(30) Priorité: 01.07.2002 FR 0208190
(71) Demandeur: CF Gomma Spa, 25050 Passirano (Brescia) (IT)
(72) Inventeur: Beauvy, Alain, 35137 Bedee (FR); Le Guen, Jean, 35190 Tinteniac (FR)
(74) Mandataire: Bomer, Françoise Marie

(57) **Abrégé**

L'invention concerne un dispositif d'articulation hydroélastique à effet axial (4) destiné à isoler deux éléments l'un par rapport à l'autre et comprenant un boîtier extérieur (5), un noyau tubulaire central (6), une articulation intermédiaire (7), deux éléments de fermeture (8, 8') dont chacun comprend une douille intérieure (82), une bague extérieure (81) et une membrane de matière élastomère (83, 83') en forme de rondelle reliant ladite douille à ladite bague et deux chambres (91, 91') communiquant l'une avec l'autre par un canal (92) et remplies de liquide (9).

Ce dispositif est remarquable en ce que ledit boîtier extérieur (5) est partiellement fermé à chacune de ses deux extrémités, par une collerette intérieure (51, 51'), s'étendant en direction du noyau (6) sans l'atteindre, cette collerette (51, 51') recouvrant une grande partie de ladite membrane (83, 83') de l'élément de fermeture (8) depuis sa périphérie, avec un léger jeu (**j**), de façon à autoriser un débattement axial de ladite membrane (83, 83') et à permettre ainsi un découplage des fonctions d'amortissement mécanique et hydraulique.

Domaine de l'industrie automobile.

## Description

La présente invention concerne un dispositif d'articulation hydroélastique à effet axial.

Un tel dispositif est notamment destiné à équiper un triangle de suspension ou un essieu arrière déformable d'un véhicule automobile.

Un tel essieu comporte généralement une paire de bras de suspension longitudinaux qui supportent la caisse du véhicule, et sont reliés l'un à l'autre par une traverse déformable en torsion, l'une des extrémités de chaque bras (dirigée vers l'arrière du véhicule) portant un moyeu de roue, tandis que son autre extrémité (dirigée vers l'avant) est reliée à la caisse du véhicule au moyen d'un dispositif d'articulation élastique, d'axe horizontal transversal, ou approximativement transversal.

Ce genre d'essieu est généralement monté sur des véhicules automobiles à traction avant, pour assurer la liaison de la caisse avec les roues arrières, non motrices.

Toutefois, lors du déplacement du véhicule, on constate que cet essieu est soumis à un mode de sollicitation horizontale, dit "mode de SHR" (ou Sollicitation Horizontale de Roue) qui se situe à une fréquence comprise entre 15 et 25 Hz. Cette sollicitation, assimilable à un mouvement de tamisage ou de va et vient en direction horizontale, est nuisible au confort du conducteur et des passagers du véhicule.

La présente invention a pour but de mettre au point une articulation hydroélastique visant à réduire cette sollicitation horizontale, notamment sa composante transversale à l'axe longitudinal du véhicule.

On connaît déjà d'après le document WO 01/11256, un palier à amortissement hydraulique axial, destiné à isoler deux éléments l'un par rapport à l'autre.

Ce palier comprend un manchon cylindrique intérieur, un manchon cylindrique extérieur, une articulation centrale intercalée radialement entre les deux manchons précités et deux anneaux d'élastomère reliant entre eux lesdits manchons, respectivement aux deux extrémités de ladite articulation centrale. Les deux manchons intérieur et extérieur sont aptes à être reliés respectivement aux deux éléments à isoler.

En outre, un espace est ménagé entre chaque extrémité de l'articulation centrale et l'anneau d'élastomère lui faisant face, de façon à former des chambres destinées à être remplies d'un liquide d'amortissement. Ces chambres communiquent entre elles grâce à deux canaux périphériques ménagés entre la face intérieure du manchon extérieur et la face extérieure de l'articulation centrale.

On connaît également d'après le document WO 01/88405, un dispositif d'amortissement de structure similaire à celui qui vient d'être décrit, si ce n'est pas le canal assurant la communication entre les deux chambres d'amortissement est ménagé axialement à l'intérieur de l'armature intérieure de l'articulation centrale.

Dans les deux dispositifs précités, le déplacement axial du manchon intérieur par rapport au manchon extérieur, induit par une sollicitation extérieure, se traduit par une déformation immédiate des deux anneaux d'élastomère des extrémités. Il en résulte une déformation des deux chambres d'amortissement, le volume de l'une augmentant tandis que le volume de l'autre diminue et le liquide d'amortissement se déplace de l'une vers l'autre, à travers le canal d'amortissement.

La section et la longueur du canal d'amortissement sont déterminées de façon que la fréquence de résonance de la masse de liquide qui le traverse - appelée colonne d'amortissement hydraulique - corresponde sensiblement à la fréquence moyenne des sollicitations subies par ce dispositif d'amortissement.

Or, lorsqu'un tel dispositif est soumis à des sollicitations de faibles amplitudes et de fréquence élevée, la colonne d'amortissement n'est pas efficace. On observe alors un phénomène de rigidification du dispositif d'amortissement et l'augmentation de la raideur se traduit par un niveau de bruit plus élevé.

L'invention a pour but de résoudre ces inconvénients et notamment de mettre au point un dispositif d'amortissement qui puisse être utilisé sur une large gamme de fréquences et d'amplitudes de vibrations, y compris les faibles amplitudes et les fréquences élevées, de façon à pouvoir être monté notamment sur un essieu arrière déformable de véhicule automobile.

A cet effet, l'invention concerne un dispositif d'articulation hydroélastique à effet axial, destiné à isoler deux éléments l'un par rapport à l'autre, comprenant :
- un boîtier extérieur tubulaire apte à être emmanché dans ledit premier élément,
- un noyau tubulaire central apte à être fixé audit second élément et monté coaxialement à l'intérieur dudit boîtier extérieur,
- une articulation intermédiaire intercalée entre ledit boîtier et ledit noyau central, cette articulation comprenant un manchon intérieur emmanché en force autour dudit noyau tubulaire central, un manchon extérieur emmanché en force à l'intérieur dudit boîtier extérieur tubulaire et une masse de matière élastomère reliant ces deux manchons,
- deux éléments de fermeture disposés respectivement aux deux extrémités de ladite articulation intermédiaire, chacun desdits éléments de fermeture comprenant une douille intérieure emmanchée en force autour dudit noyau tubulaire central, une bague extérieure emmanchée en force à l'intérieur dudit boîtier extérieur tubulaire et une membrane de matière élastomère en forme de rondelle reliant ladite douille à ladite bague,
- deux chambres étant ménagées respectivement entre chacune des extrémités de l'articulation intermédiaire et la membrane de matière élastomère lui faisant face, ces deux chambres communiquant l'une avec l'autre par au moins un canal, dit "canal d'amortissement", ces deux chambres et ce canal contenant un liquide d'amortissement.

Conformément à l'invention, ledit boîtier extérieur tubulaire est partiellement fermé à chacune de ses deux extrémités, par une paroi, dite "collerette intérieure" s'étendant en direction du noyau tubulaire central sans l'atteindre, cette collerette recouvrant une grande partie de ladite membrane de l'élément de fermeture depuis sa périphérie, avec un léger jeu, de façon à autoriser un débattement axial de ladite membrane par rapport à ladite collerette intérieure et à permettre ainsi un découplage des fonctions d'amortissement mécanique et hydraulique.

Selon d'autres caractéristiques avantageuses et non limitatives de l'invention :
- ladite membrane d'élastomère s'étend en regard de toute la largeur de la masse d'élastomère et d'au moins une partie du manchon intérieur de l'articulation intermédiaire ;
- la collerette intérieure est une rondelle annulaire ou sensiblement annulaire maintenue à sa périphérie par les extrémités axiales respectives du boîtier extérieur et de la bague extérieure ;
- au moins l'une des faces d'extrémité de la masse d'élastomère est munie d'au moins une gorge ;
- le boîtier extérieur est composé de deux demi-coques assemblées l'une à l'autre ;
- le boîtier extérieur présente à au moins l'une de ses deux extrémités, une collerette périphérique, dite "collerette extérieure", s'étendant vers l'extérieur perpendiculairement ou quasiment perpendiculairement à l'axe longitudinal dudit boîtier, cette collerette extérieure supportant sur sa face d'extrémité axiale, au moins une butée de limitation du déplacement axial dudit boîtier ;
- le canal d'amortissement est ménagé axialement entre la paroi extérieure du noyau tubulaire central et la face intérieure du manchon intérieur de l'articulation intermédiaire et en ce que chaque douille intérieure présente une encoche située en regard de l'extrémité correspondante dudit canal, de façon que ledit canal débouche dans les deux chambres d'amortissement ;
- le canal d'amortissement est ménagé dans le manchon intérieur de l'articulation intermédiaire ;
- le noyau tubulaire central et le manchon intérieur de l'articulation intermédiaire sont monoblocs.

La présente invention a également pour objet un essieu déformable pour véhicule automobile, qui comporte une paire de bras de suspension longitudinaux destinés à supporter la caisse dudit véhicule et reliés l'un à l'autre par une traverse déformable en torsion, l'une des extrémités de chaque bras portant un moyeu de roue, caractérisé en ce que l'autre extrémité de chaque bras est reliée à la caisse du véhicule au moyen du dispositif d'articulation hydroélastique selon l'une quelconque des revendications précédentes, l'axe longitudinal de ce dispositif d'articulation s'étendant horizontalement et transversalement ou approximativement transversalement à l'axe longitudinal dudit véhicule automobile.

D'autres caractéristiques et avantages de l'invention apparaîtront à la lecture de la description suivante d'un mode de réalisation préféré de l'invention. Cette description est rédigée en faisant référence aux dessins annexés dans lesquels:
- la figure 1 est une vue schématique, en perspective, d'un essieu déformable traditionnel ;
- la figure 2 est une vue en perspective éclatée d'un premier mode de réalisation du dispositif d'articulation hydroélastique conforme à l'invention ;
- la figure 3 est une vue en coupe longitudinale d'une variante de réalisation du dispositif d'articulation représenté sur la figure 2 ;
- la figure 4 est une vue en coupe longitudinale, prise selon un plan de coupe schématisé par la ligne IV-IV sur la figure 3 ;
- la figure 5 est une vue de détail de la zone référencée **A** sur la figure 4 ;
- la figure 6 est une vue en coupe longitudinale du dispositif d'articulation hydroélastique conforme du premier mode de réalisation représenté sur la figure 2 ;
- la figure 7 est une vue en coupe longitudinale, prise selon un plan de coupe schématisé par la ligne VII-VII sur la figure 6;
- la figure 8 est une vue en coupe longitudinale d'un second mode de réalisation du dispositif d'articulation hydroélastique conforme à l'invention ;
- et la figure 9 est une vue de détail de la zone référencée B sur la figure 8.

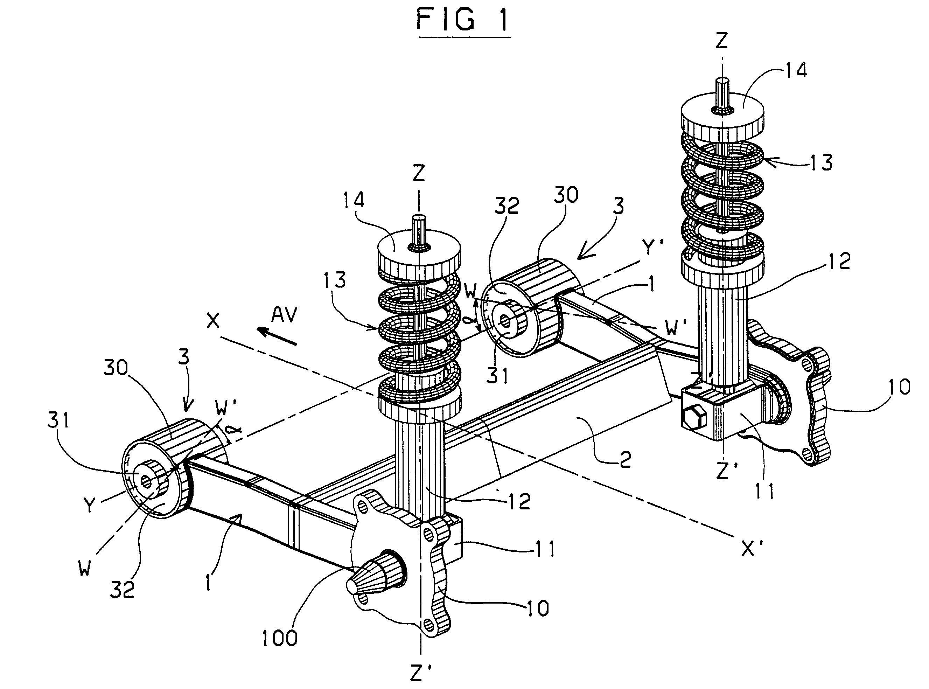

Sur la figure 1, on a représenté un essieu déformable traditionnel, destiné à supporter les deux roues arrière, non motrices, d'un véhicule automobile.

On a désigné par la référence **X-X'** la direction longitudinale du véhicule, et par la référence **Y-Y'**, sa direction transversale.

Ces deux axes sont situés dans un plan horizontal.

La flèche **AV** correspond à l'avant du véhicule.

Cet essieu est composé de deux bras longitudinaux parallèles 1, approximativement horizontaux, reliés par une traverse 2.

Cette traverse est généralement un profilé ouvert vers le bas, de section "U" ou en "V" renversé, qui joue le rôle de barre de torsion.

L'essieu a une configuration symétrique par rapport à un plan vertical longitudinal médian.

Ce qui vaut pour la description de la structure d'essieu située sur l'un des côtés du véhicule, vaut également pour l'autre côté.

A son extrémité avant, chaque bras 1 est solidaire, par exemple par soudage, d'un dispositif d'articulation élastique 3.

Ce dispositif comprend un boîtier tubulaire métallique 30, par exemple de forme cylindrique, qui entoure coaxialement un noyau central 31, également métallique.

Les éléments 30 et 31 sont reliés par un anneau en matériau élastique, caoutchouc ou matière élastomère, référencé 32.

Le noyau 31 est traversé par une ouverture centrale, qui permet de le rendre solidaire de la caisse du véhicule, par exemple au moyen d'une vis.

Cette liaison - non représentée - assure une immobilisation complète du noyau 31 par rapport à la caisse, aussi bien en translation qu'en rotation.

Dans l'exemple illustré, l'axe du noyau central 31 correspond à la direction transversale **Y-Y'**.

Cependant, il peut être prévu que l'axe **W-W'** de ce noyau forme un angle α par rapport à la direction transversale, cet angle étant ainsi orienté que les deux axes **W-W'** forment un "V" très ouvert, dont la pointe est dirigée vers l'avant.

Une telle angulation permet à l'essieu de se déplacer par rapport à la caisse suivant une loi cinématique souhaitée.

A son extrémité arrière, chaque bras 1 est solidaire d'un moyeu 10 de fixation de roue, portant une fusée d'axe 100, sur laquelle vient se centrer la roue, ceci de manière bien connue.

Les fusées 100 sont bien entendu dirigées vers l'extérieur du véhicule.

Côté intérieur, chaque bras porte un étrier 11, auquel est fixé un amortisseur 12 dirigé vers le haut.

Celui-ci supporte un ressort hélicoïdal 13 qui, par l'intermédiaire d'une coupelle d'appui 14 en matière élastomère, supporte la caisse du véhicule (non représentée).

L'axe **Z-Z'** du système amortisseur 12/ressort 13 est vertical, ou sensiblement vertical.

L'invention concerne un dispositif d'articulation hydroélastique à effet axial référencé 4, susceptible, par exemple, de remplacer le dispositif d'articulation 3 précédemment décrit.

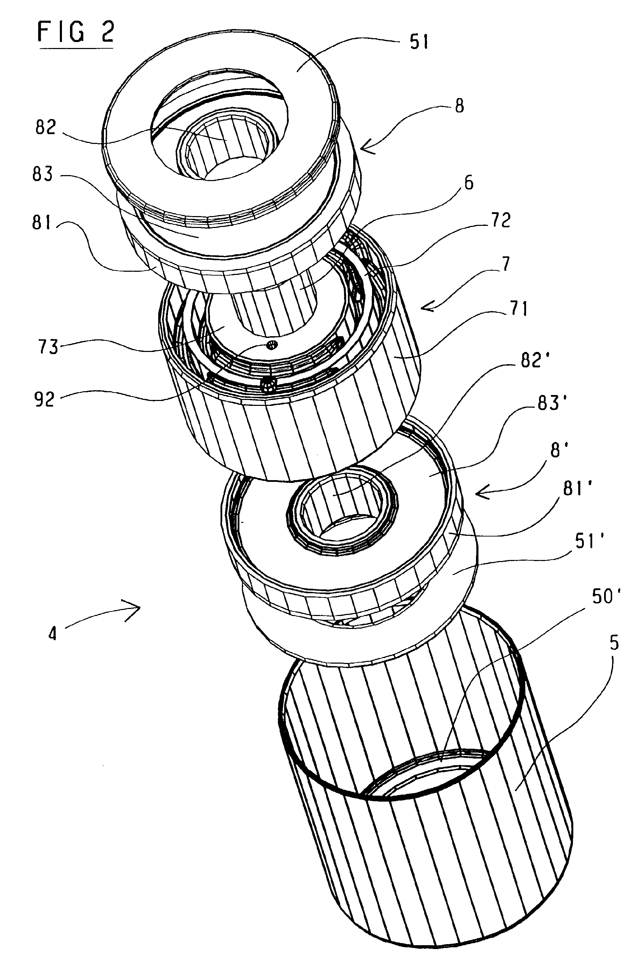

En se référant plus particulièrement aux figures 2 à 4, nous allons maintenant décrire la structure du dispositif d'articulation conforme à l'invention.

Ce dispositif comporte un boîtier extérieur tubulaire 5, un noyau tubulaire central 6, une articulation intermédiaire 7 et deux éléments de fermeture référencés respectivement 8 et 8'.

Le noyau 6 est une pièce tubulaire présentant une ouverture centrale cylindrique 60 et une paroi extérieure 61 également cylindrique.

L'axe longitudinal du noyau 6 correspond à la direction **Y-Y'**.

Le noyau 6 peut être fixé par exemple à la caisse d'un véhicule automobile, par tout moyen connu, de manière à assurer son immobilisation aussi bien en rotation (autour de l'axe **Y-Y'**) qu'en translation.

Cette fixation peut être réalisée par exemple au moyen d'une vis traversant l'alésage 60 et vissée à fond dans un trou taraudé formé dans la caisse, de manière à assurer (par la tête de vis) un serrage suffisant pour bloquer ce noyau 6 contre la caisse.

L'alésage 60 pourrait également être cannelé, de façon à permettre l'immobilisation en rotation par embranchement sur un arbre cannelé complémentaire, porté par la caisse.

Le noyau tubulaire 6 est en métal, par exemple en acier ou en aluminium de grande résistance.

L'articulation intermédiaire 7 est disposée coaxialement autour du noyau tubulaire central 6.

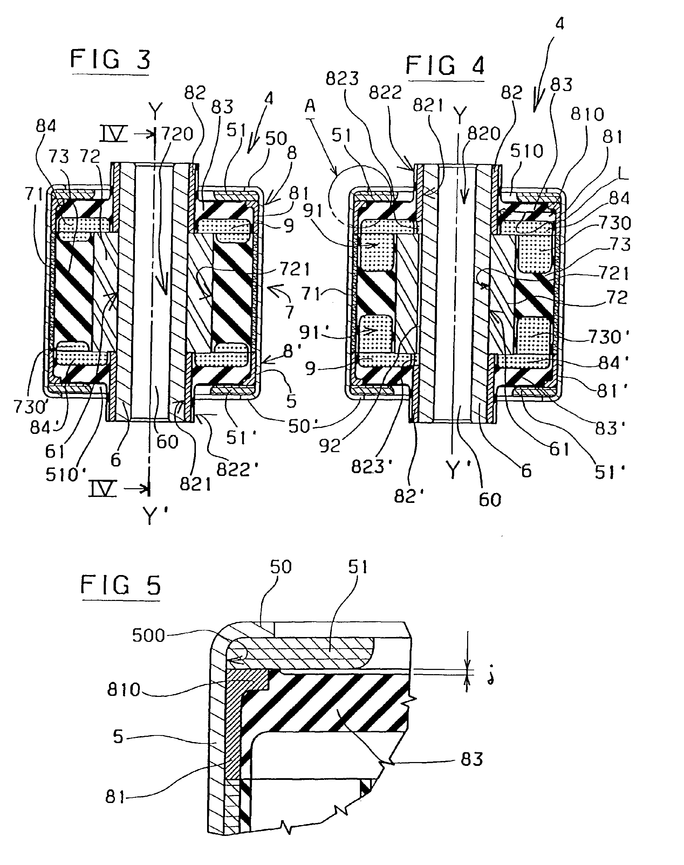

Comme cela apparaît mieux sur la figure 3, cette articulation intermédiaire 7 comprend un manchon extérieur 71 et un manchon intérieur 72 reliés entre eux par une masse d'élastomère 73.

Le manchon intérieur 72 est une pièce tubulaire présentant une ouverture cylindrique centrale 720 délimitée par une paroi intérieure 721 circulaire.

Ce manchon intérieur 72 est emmanché en force sur le noyau tubulaire central 6, de façon à assurer son immobilisation autour de celui-ci, aussi bien en rotation (autour de l'axe **Y-Y'**) qu'en translation.

A cet effet, le diamètre de l'ouverture 720 coïncide, avec un serrage, au diamètre extérieur du tube central 6.

Ce manchon intérieur 72 est monté coaxialement à l'intérieur du manchon extérieur 71 qui présente également une forme cylindrique.

Le manchon extérieur 71 peut être réalisé en métal, (par exemple en acier ou en aluminium) ou en matériau thermoplastique.

Le manchon intérieur 72 est avantageusement réalisé en métal, de préférence en aluminium extrudé.

La masse d'élastomère 73 est de préférence adhérisée aussi bien sur la paroi externe du manchon intérieur 72 que sur la paroi interne du manchon extérieur 71.

Les faces de la masse d'élastomère 73 situées à ses deux extrémités axiales, dites "faces d'extrémité" sont munies d'au moins une gorge 730 en "U".

Cette gorge 730 est annulaire (elle s'étend autour de l'axe **Y-Y'**) et sa profondeur peut varier comme on peut le constater sur la figure 4.

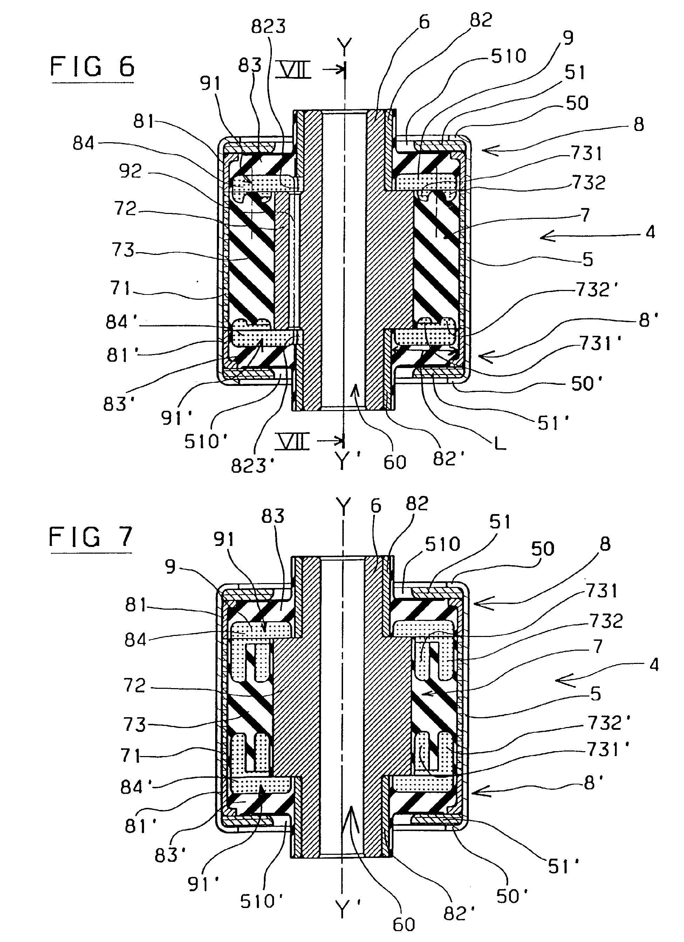

Comme illustré sur la variante représentée sur les figures 6 et 7, cette gorge unique 730 peut être remplacée par deux gorges annulaires concentriques, référencées 731 et 732 dont la profondeur peut également varier.

La forme et le nombre de ces gorges peuvent être modifiés sans pour autant sortir du cadre de l'invention.

Sur les figures 3, 4, 6, 7 et 8, la masse d'élastomère 73 est toujours représentée comme étant cylindrique et entourant la totalité du manchon intérieur 72. Toutefois, elle pourrait également présenter une forme de chevron en coupe transversale, c'est-à-dire qu'elle pourrait s'étendre uniquement sur certaines portions angulaires entre les deux manchons 71 et 72.

La forme de cette masse d'élastomère 73 dépendra des raideurs radiale, axiale, conique et torsionnelle que l'on souhaite donner au dispositif d'articulation.

Les deux éléments de fermeture 8, 8' sont disposés respectivement aux deux extrémités de l'articulation intermédiaire 7. Ils sont identiques et seul l'élément de fermeture 8 situé dans la partie supérieure du dispositif sera décrit plus en détail, (le terme "supérieure" étant à considérer par rapport aux figures 3 et 4).

Les pièces constitutives de l'élément de fermeture 8' portent les mêmes références que l'élément 8, majoré du signe

L'élément de fermeture 8 comprend une bague extérieure 81, une douille intérieure 82 et une membrane d'élastomère 83.

La douille 82 est un cylindre présentant une ouverture centrale 820 circulaire délimitée par une paroi intérieure 821.

Cette douille présente une paroi extérieure cylindrique 822.

Le diamètre intérieur de l'ouverture 820 est dimensionné pour que la douille 82 soit emmanchée en force autour du noyau tubulaire central 6, ce qui garantie son immobilisation par rapport à ce noyau, aussi bien en rotation qu'en translation.

En outre, la douille 82 vient en butée à l'une de ses extrémités contre l'extrémité du manchon intérieur 72.

La bague extérieure 81 est cylindrique. Elle peut présenter un collet battu 810 à son extrémité supérieure, (comme cela apparaît mieux sur la vue de détail de la figure 5).

De préférence, la douille 82 et la bague 81 sont réalisées en métal, (acier ou aluminium) ou en matériau thermoplastique.

La membrane d'élastomère 83 présente la forme d'une rondelle s'étendant sensiblement radialement autour de la douille 82. Elle relie la douille 82 à la bague 81.

L'épaisseur de cette membrane 83 déterminera les raideurs de tenue à la pression que l'on souhaite obtenir.

Cette membrane d'élastomère 83 s'étend donc en regard de l'articulation intermédiaire 7 sur toute la largeur de la masse d'élastomère 73 et sur au moins une partie du manchon intérieur 72, comme on peut le constater sur les figures 3 et 4.

La membrane 83 est espacée de l'extrémité de l'articulation intermédiaire 7 lui faisant face d'une certaine distance, de sorte qu'il existe entre ces éléments un espace libre annulaire 84, s'étendant en largeur, sensiblement de la douille 82 à la bague 81 et en hauteur, de la base de la membrane 83 jusqu'à l'extrémité du manchon intérieur 72.

Cet espace 84 débouche en regard de la gorge 730 prévue dans la masse d'élastomère 73.

Cet espace 84 et la gorge 730 lui faisant face définissent conjointement une chambre 91 dite "chambre d'amortissement", (voir figure 4).

De façon similaire, dans la partie inférieure des figures 3 et 4, la gorge 730' et l'espace 84' définissent conjointement une chambre d'amortissement 91'.

Ces deux chambres 91, 91' sont destinées à être remplies d'un liquide d'amortissement, généralement de l'antigel, référencé 9.

Elles sont reliées entre elles par un canal de faible section, dit "canal d'amortissement", référencé 92.

Dans le mode de réalisation illustré sur la figure 4, ce canal d'amortissement 92 est ménagé longitudinalement dans la face intérieure 721 du manchon intérieur 72 de l'articulation intermédiaire 7. Il s'étend en regard de la paroi extérieure 61 du noyau tubulaire central 6.

En outre, la douille 82 est munie à son extrémité située au contact du manchon intérieur 72, d'une encoche 823 débouchant en regard du canal d'amortissement 92 et également dans la chambre d'amortissement 91.

De façon similaire, la douille 82' présente une encoche 823'.

Grâce aux encoches 823, 823' et au canal d'amortissement 92, les deux chambres 91 et 91' sont en communication de liquide.

Selon une deuxième variante de réalisation illustrée sur la figure 6, le canal d'amortissement 92 est creusé longitudinalement (parallèlement à l'axe **Y-Y'**) dans l'épaisseur du manchon intérieur 72.

En outre, sur cette figure, le manchon intérieur 72 et le noyau tubulaire central 6 sont d'une seule pièce (monoblocs).

L'articulation intermédiaire 7 et les deux éléments de fermeture 8, 8' sont logés à l'intérieur du boîtier extérieur 5 de forme générale cylindrique. Le manchon extérieur 71 et les deux bagues extérieures 81 et 81' sont emmanchés en force à l'intérieur de ce boîtier 5 et sont donc solidaires de celui-ci en translation et en rotation autour de l'axe **Y-Y'**.

Selon un premier mode de réalisation illustré sur les figures 2 à 7, ce boîtier extérieur 5 est constitué d'un cylindre unique dont les deux extrémités sont repliées vers l'intérieur sensiblement perpendiculairement à l'axe **Y-Y'**, de façon à former un collet battu 50, respectivement 50'.

Deux rondelles référencées 51, respectivement 51', dites "collerettes intérieures", permettent de fermer partiellement ledit boîtier extérieur tubulaire 5 à chacune de ses deux extrémités.

Ces deux rondelles 51, 51' étant identiques, seule la rondelle 51 située dans la partie supérieure des figures 3 à 7 sera décrite.

La collerette intérieure 51 s'étend depuis la paroi intérieure 500 du boîtier 5, (voir figure 5) vers l'extérieur, en direction du noyau tubulaire central 3, sans toutefois l'atteindre. Cette collerette 51 est pincée à sa périphérie par les extrémités respectives 50 du boîtier 5 et 810 de la bague extérieure 81.

Cette collerette 51 est avantageusement réalisée en matériau thermoplastique ou en aluminium tout comme le boîtier extérieur 5.

L'ouverture centrale 510 délimitée par la collerette 51 n'est pas forcément circulaire.

Cette collerette intérieure 51 recouvre une grande partie de la membrane 83 de l'élément de fermeture 8 depuis sa périphérie, avec toutefois un léger jeu j, qui apparaît plus nettement sur la figure 5.

La membrane 83 ne s'étend pas forcément rigoureusement parallèlement à la collerette intérieure 51, de sorte que la valeur du jeu j peut varier. Ceci est notamment le cas si la membrane 83 présente une forme légèrement conique, notamment concave, en direction de l'intérieur de l'articulation.

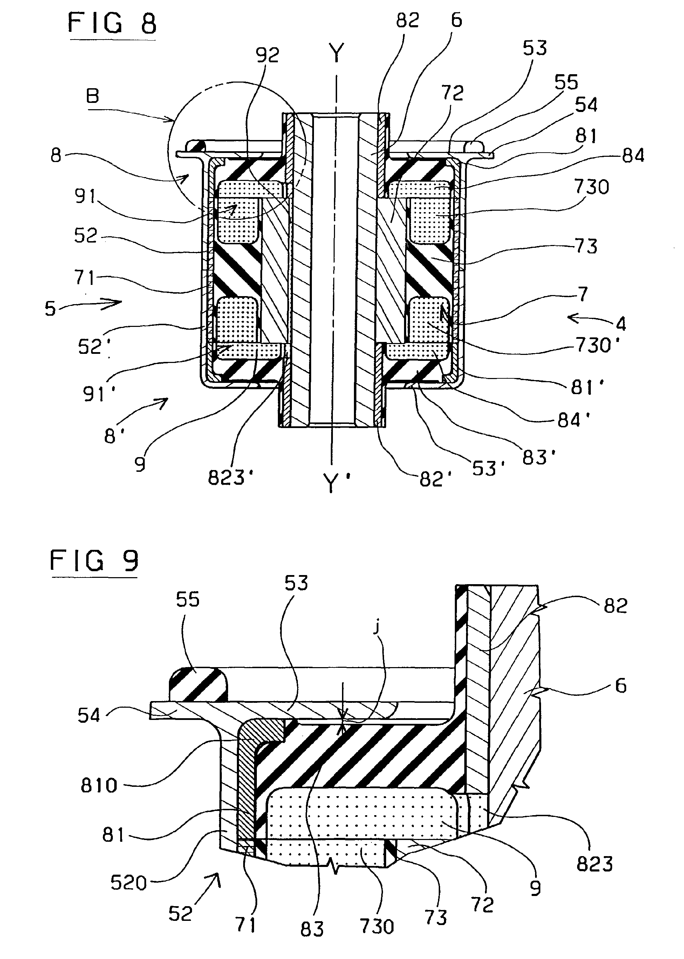

Selon une deuxième variante de réalisation illustrée sur les figures 8 et 9, le boîtier extérieur 5 se compose de deux demi-coques 52, 52', assemblées l'une à l'autre par exemple par encliquetage. Chaque demi-coque 52, 52' présente un axe de révolution confondu avec l'axe **Y-Y'**.

La demi-coque supérieure 52 va maintenant être décrite.

Elle comprend une portion tubulaire 520, partiellement fermée à son extrémité supérieure, par une paroi 53, dite "collerette intérieure" venue de matière avec ladite portion 520. Comme décrit précédemment sur la collerette 51, cette collerette intérieure 53 s'étend en direction du noyau tubulaire central 6 sans l'atteindre, en recouvrant une grande partie de la membrane 83 de l'élément de fermeture, depuis sa périphérie extérieure, avec un léger jeu **j** (voir notamment figure 9).

La membrane 83 n'est donc pas adhérisée à la collerette intérieure 51 ou 53, ce qui autorise un léger débattement axial de cette dernière. En d'autres termes, la collerette 51, ou 53 peut se déplacer sur une faible amplitude, sans exercer de pression sur la membrane d'élastomère 83 qui lui fait face.

Dans le mode de réalisation illustré sur les figures 8 et 9, les deux demi-coques 52, 52' ne sont pas rigoureusement identiques et la demi-coque 52 présente en outre une collerette extérieure 54 s'étendant dans le prolongement (dans le plan) de la collerette 53, mais en direction opposée, c'est-à-dire vers l'extérieur du dispositif d'articulation.

Cette collerette extérieure 54 peut supporter une butée 55 surmoulée, réalisée en caoutchouc ou en matériau thermoplastique élastomère. Une telle butée 55 permet de limiter le débattement du dispositif d'articulation selon l'axe **Y-Y'**.

Cette butée 55 peut être annulaire et s'étendre sur la totalité de la collerette extérieure 54, ou au contraire se présenter sous forme de plusieurs butées distinctes.

Dans la description qui précède, toutes ces pièces ont été décrites comme étant sensiblement cylindriques, c'est-à-dire de section circulaire, perpendiculairement à l'axe **Y-Y'**. Toutefois, la section de ces différentes pièces pourrait éventuellement être carrée, hexagonale ou octogonale.

Le montage du dispositif d'articulation hydroélastique selon l'invention va maintenant être décrit plus en détail.

L'articulation intermédiaire 7 et les éléments de fermeture 8, 8' sont moulés au préalable dans des moules multi-empreintes.

Lorsque le boîtier 5 se compose de deux demi-coques 52, 52', on commence par assembler les éléments de fermeture 8 et 8' respectivement au fond de chaque demi-coque 52, 52'. Ensuite, on emmanche axialement l'articulation intermédiaire 7 dans l'une des demi-coques, par exemple la demi-coque 52', jusqu'à ce que le manchon intérieur 72 vienne en butée contre la douille intérieure 82, l'encoche 823 étant en regard du canal 92. On emmanche alors ce sous-ensemble à l'intérieur de l'autre demi-coque 52 selon un montage similaire. Enfin, on emmanche en force et axialement le noyau tubulaire central 6 au travers des trois éléments précités.

Lorsque le boîtier 5 se présente sous la forme d'une pièce unique, on rabat le collet 50' de l'extrémité inférieure du boîtier 5, puis on introduit à l'intérieur de celui-ci et successivement, la collerette 51', l'élément de fermeture 8', l'articulation intermédiaire 7, l'élément de fermeture 8 et enfin la collerette intérieure 51. On procède au sertissage de l'autre extrémité du boîtier 5 de façon à former le collet battu 50.

Le montage du dispositif d'articulation selon l'invention suppose le remplissage des chambres d'amortissement 91, 91' et du canal 92 les reliant, par le liquide d'amortissement 9, (généralement de l'antigel).

Ce montage peut se faire en immersion dans une piscine remplie de liquide antigel, ce qui a pour effet de permettre le remplissage desdites chambres et du canal avec ce liquide.

Le remplissage du liquide 9 peut également s'effectuer sous vide, par exemple par un orifice percé à travers le boîtier 5 et la bague extérieure 81, 81' et obturé ultérieurement par une bille ou un rivet étanche.

Le fonctionnement du dispositif selon l'invention va maintenant être décrit plus en détail.

Sous l'action d'une sollicitation axiale du boîtier 5, par rapport au noyau tubulaire central 6, par exemple vers le bas de la figure 4 les collerettes intérieures 51 et 51' se déplacent également vers le bas. La collerette 51 exerce une pression sur la membrane 83. Celle-ci se déforme en direction de l'articulation intermédiaire 7, ce qui a pour effet de diminuer le volume de la chambre d'amortissement 91. Le liquide 9 présent dans celle-ci est chassé vers la deuxième chambre 91' via le canal 92.

Le volume de cette deuxième chambre 91' a par ailleurs augmenté suite au déplacement vers le bas de la collerette 51', de sorte que cette chambre peut recevoir l'excédent de liquide 9 chassé depuis la chambre supérieure 91.

La section et la longueur du canal déterminent la valeur de la fréquence de résonance du dispositif. La membrane 83 exerce un effet de piston. La largeur L de la membrane 83 prise entre la douille 82 et la bague 81 est assez importante par rapport aux dispositifs de l'état de la technique, de sorte que la section de ce piston est importante. En outre, ceci améliore l'endurance du système. Enfin, cette grande largeur est telle que la membrane 83 a peu d'influence sur les raideurs radiales, axiales, torsionnelles et coniques du dispositif d'articulation et que ces différentes raideurs sont principalement exercées par l'articulation intermédiaire 7. De ce fait, les raideurs coniques et torsionnelles sont faibles.

Le fonctionnement du dispositif illustré sur les figures 6 à 8 est identique.

Enfin, conformément à une caractéristique importante de l'invention, lorsque le dispositif d'articulation est soumis à des sollicitations (vibrations) de faibles amplitudes, le jeu j existant entre la membrane 83 et la collerette 51 ou 53 (respectivement entre la membrane 83' et la collerette 51' ou 53') permet de ne pas avoir le phénomène hydraulique de déplacement d'un volume de liquide, d'une chambre d'amortissement dans l'autre, donc de ne pas avoir de rigidification et de bruit.

Ce jeu **j** permet de découpler l'amortissement hydraulique de l'amortissement mécanique. En d'autres termes, le phénomène d'amortissement hydraulique ne se déclenche que pour des vibrations dont l'amplitude est supérieure à un certain seuil.

On notera également que la structure et le montage de ce dispositif d'articulation sont simples, ce qui entraîne une diminution de son coût de réalisation.

L'invention concerne également un essieu déformable, tel que celui représenté sur la figure 1, mais dans lequel les dispositifs d'articulation élastique 3 ont été remplacés par les dispositifs d'articulation hydroélastique 4 conformes à l'invention.

L'axe longitudinal du dispositif d'articulation hydroélastique 4 s'étend alors transversalement à l'axe longitudinal **X-X'** du véhicule automobile équipé de cet essieu, ou forme un angle α par rapport à cette direction transversale **Y-Y'**, comme décrit précédemment pour le dispositif d'articulation 3 de l'état de la technique.

## Revendications

1. Dispositif d'articulation hydroélastique à effet axial (4), destiné à isoler deux éléments l'un par rapport à l'autre, comprenant :
- un boîtier extérieur tubulaire (5) apte à être emmanché dans ledit premier élément,
- un noyau tubulaire central (6) apte à être fixé audit second élément et monté coaxialement à l'intérieur dudit boîtier extérieur (5),
- une articulation intermédiaire (7), intercalée entre ledit boîtier (5) et ledit noyau central (6), cette articulation (7) comprenant un manchon intérieur (72) emmanché en force autour dudit noyau tubulaire central (6), un manchon extérieur (71) emmanché en force à l'intérieur dudit boîtier extérieur tubulaire (5) et une masse de matière élastomère (73) reliant ces deux manchons (71, 72),
- deux éléments de fermeture (8, 8') disposés respectivement aux deux extrémités de ladite articulation intermédiaire (7), chacun desdits éléments de fermeture (8, 8') comprenant une douille intérieure (82, 82') emmanchée en force autour dudit noyau tubulaire central (6), une bague extérieure (81, 81') emmanchée en force à l'intérieur dudit boîtier extérieur tubulaire (5) et une membrane de matière élastomère (83, 83') en forme de rondelle reliant ladite douille à ladite bague,
- deux chambres (91, 91') étant ménagées respectivement entre chacune des extrémités de l'articulation intermédiaire (7) et la membrane de matière élastomère (83, 83') lui faisant face, ces deux chambres (91, 91') communiquant l'une avec l'autre par au moins un canal (92), dit "canal d'amortissement", ces deux chambres (91, 91') et ce canal (92) contenant un liquide d'amortissement 9,
**caractérisé en ce que** ledit boîtier extérieur tubulaire (5), est partiellement fermé à chacune de ses deux extrémités, par une paroi (51, 51' ; 53, 53') dite "collerette intérieure", (51, 51' ; 53, 53') s'étendant en direction du noyau tubulaire central (6) sans l'atteindre, cette collerette recouvrant une grande partie de ladite membrane (83, 83') de l'élément de fermeture (8) depuis sa périphérie, avec un léger jeu (j), de façon à autoriser un débattement axial de ladite membrane (83, 83') par rapport à cette collerette intérieure (51, 51' ; 53, 53') et à permettre ainsi un découplage des fonctions d'amortissement mécanique et hydraulique.

2. Dispositif selon la revendication 1, **caractérisé en ce que** ladite membrane d'élastomère (83, 83') s'étend en regard de toute la largeur de la masse d'élastomère (73) et d'au moins une partie du manchon intérieur (72) de l'articulation intermédiaire (7).

3. Dispositif selon la revendication 1 ou 2, **caractérisé en ce que** la collerette intérieure est une rondelle annulaire ou sensiblement annulaire (51, 51') maintenue à sa périphérie par les extrémités axiales respectives (50, 810) du boîtier extérieur (5) et de la bague extérieure (81).

4. Dispositif selon l'une quelconque des revendications précédentes, **caractérisé en ce qu'**au moins l'une des faces d'extrémité de la masse d'élastomère (73) est munie d'au moins une gorge (730, 731, 732).

5. Dispositif selon l'une quelconque des revendications précédentes, **caractérisé en ce que** le boîtier extérieur (5) est composé de deux demi-coques (52, 52') assemblées l'une à l'autre.

6. Dispositif selon l'une quelconque des revendications précédentes, **caractérisé en ce que** le boîtier extérieur (5) présente à au moins l'une de ses deux extrémités, une collerette périphérique (54), dite "collerette extérieure", s'étendant vers l'extérieur perpendiculairement ou quasiment perpendiculairement à l'axe longitudinal (**Y-Y'**) dudit boîtier (5), cette collerette extérieure (54) supportant sur sa face d'extrémité axiale, au moins une butée (55) de limitation du déplacement axial dudit boîtier (5).

7. Dispositif selon l'une quelconque des revendications précédentes, **caractérisé en ce que** le canal d'amortissement (92) est ménagé axialement entre la paroi extérieure (61) du noyau tubulaire central (6) et la face intérieure (721) du manchon intérieur (72) de l'articulation intermédiaire (7) et **en ce que** chaque douille intérieure (82) présente une encoche (823) située en regard de l'extrémité correspondante dudit canal (92), de façon que ledit canal (92) débouche dans les deux chambres d'amortissement (91, 91').

8. Dispositif selon l'une quelconque des revendications précédentes, **caractérisé en ce que** le canal d'amortissement (92) est ménagé dans le manchon intérieur (72) de l'articulation intermédiaire (7).

9. Dispositif selon l'une quelconque des revendications précédentes, **caractérisé en ce que** le noyau tubulaire central (6) et le manchon intérieur (72) de l'articulation intermédiaire (7) sont monoblocs.

10. Essieu déformable pour véhicule automobile, qui comporte une paire de bras de suspension longitudinaux (1) destinés à supporter la caisse dudit véhicule et reliés l'un à l'autre par une traverse (2) déformable en torsion, l'une des extrémités de chaque bras (1) portant un moyeu de roue (10), **caractérisé en ce que** l'autre extrémité de chaque bras (1) est reliée à la caisse du véhicule au moyen du dispositif d'articulation hydroélastique (4) selon l'une quelconque des revendications précédentes, l'axe longitudinal (**Y-Y'**) de ce dispositif d'articulation (4) s'étendant horizontalement et transversalement ou approximativement transversalement à l'axe longitudinal (**X-X'**) dudit véhicule automobile.
